# EUROPEAN PATENT SPECIFICATION

(11) **EP 0 626 909 B1**
(45) Date of publication and mention of the grant of the patent: **29.12.1997**
(21) Application number: 93904215.6
(22) Date of filing: 17.02.1993
(51) Int. Cl.: B44C 1/17, G03H 1/02, B42D 15/10

(54) **TRANSFER METHOD AND DEVICE**
ÜBERTRAGUNGSVERFAHREN UND VORRICHTUNG DAFÜR
PROCEDE ET DISPOSITIF DE TRANSFERT

(30) Priority: 20.02.1992 GB 9203568
(43) Date of publication of application: 07.12.1994
(73) Proprietor: DE LA RUE HOLOGRAPHICS LIMITED, London WC2N 4DE (GB)
(72) Inventor: KAY, Ralph, Maidenhead, Berkshire SL6 8RE (GB)
(74) Representative: Skone James, Robert Edmund
(86) International application number: GB9300331
(87) International publication number: WO9316888

(56) References cited:
- EP-A- 0 328 086
- EP-A- 0 497 555
- US-A- 4 645 555

## Description

The invention relates to a method of manufacturing a transfer device, for example including an optically variable pattern.

Optically variable pattern devices such as holographic labels have become well established within the security market, noticeably for the authentication of credit cards. Holograms are valuable anti-copy features especially against colour copying, photographic colour separation and electronic scanning colour separation methods.

The conventional hologram transfer process is the hot stamping method but this is somewhat slow and requires special equipment. Thus the initial use of holographic labels has been confined to the higher price items, such as credit cards. The industry has been moving towards lower cost methods of hologram transfer and these have also allowed the use of holographic security devices in newer applications such as tamper evident labels. In these the holographic assembly may peel apart on tampering, destroying irreversibly the holographic effect. This is useful for product labelling.

Holograms provide a useful authenticity check for a valuable or authenticatable item as well as having decorative value. It is desirable to be able to provide a new, less costly means of transfer which would enable them to be used more widely on mass produced items and to be applied in a patterned manner.

Conventional hot stamping holographic transfer films incorporate a wax release layer between the carrier and the transferable layers. More recently WO 91/08524 has described a newer type of holographic transfer film in which the releasable thermoplastic layer is holographically embossed and metallised. Such an holographic transfer film is an extension of the transfer metallising films previously disclosed in the prior art in US-A-3235395, US-A-3589962, EP-A-38878 and EP-A-34392.

In WO-A-91/12694 = AU 53958/90 there is described a method of producing an image within a laminate by printing on a high temperature glue layer an image using carbon (such as toner) and then applying the whole material to a surface. The image is internal to the completed document and not accessible to tampering. Other transfer methods are described in EP-A-395411 and EP-A-145481.

In existing holographic transfer processes the holographic layers are commonly transferred in their entirety i.e. as large areas or rectangular shapes in which no interruption of the holographic film is desired. It is desirable to be able to transfer holographic films in a patterned manner such as in a series of curving lines.

Finely patterned transfers can add attractiveness and make counterfeiting and forgery yet more difficult. In addition, the portions of the substrate which lie between the transferred film may also exhibit security indicia, further inconveniencing the counterfeiter or forger.

It is already known to provide selective patterned transfer of transferable (but non-holographic films) by selectively depositing the adhesive in a pattern, see, for example, US-A-4012552. Printing with many adhesives is however difficult. The adhesive tends to be viscous and a relatively large amount has to be applied. Screen printing has been used for adhesive deposition as this can accommodate the viscosity and thickness requirements. Other conventional printing methods are not readily suitable, which is a disadvantage.

It is also possible to use patterned stamping dies. This however is comparatively complicated as a special die has to be made for each occasion and this will be limited to relatively small areas. Rollers having relief transferring patterns could also be made but these are somewhat inconvenient to make and use. The dies and rollers also wear during lengthy runs with loss of detail.

GB-A-2119312 discloses a method of rolling on a thin, swirling, linear pattern of plain metal to a bank note as part of a continuous process. This process does not allow transfer to be skipped in steps larger than the circumference of the roller.

There remains a need for a better way to control the patterned application of optically variable (including multiple layer light interfering assemblies and surface relief diffractive structures such as holograms) transfer films to substrates, especially security printed substrates.

In particular there is a need to be able to provide not only holographic block areas but also to be able to deposit the holographic material or other optically variable transfer material in a finely patterned manner.

It is also desirable to be able to change from one pattern to another with comparative ease and cost effectively without for example having to machine special blocking dies.

It is also desirable to provide patterned transfer methods which can operate at sufficiently high speeds, matching those of say a printing press.

US-A-4645555 describes a hot stamping method including a masking step in which certain characters, numerals and patterns are formed by a masking layer on a surface of the base plate, a foil sheet having an adhesive layer is placed on the surface of the masking layer and the base plate and a foil of the foil sheet is transferred to the surface of the base plate by applying heat and pressure. A final step is then carried out of leaving the transferred foil upon the surface of the base plate and releasing the masking layer and the foil transferred to the surface thereof from the base plate.

EP-A-0497555 was published on 5 August 1992 and forms part of the state of the art in relation to DE and GB only under Article 54(3) EPC. This document describes a hologram transfer foil consisting of a base film bearing a release layer, a hologram layer of thermoplastic transparent resin, and a reflective metal film, and optionally a protective resin layer thereon. The hologram is selectively transferred by the application patternwise of an adhesive material on a substrate and placing of its reflective layer thereon and peeling off the base film. Heat-activated, solvent-activated or pressure-sensitive adhesives are usable.

In connection with DE:

In accordance with one aspect of the present invention, a method of manufacturing a transfer device comprises providing a transferable layer on a carrier; providing a continuous adhesive layer bonded to the transferable layer; and selectively printing the adhesive layer with a masking composition to provide areas which are not bondable to a substrate under normal transfer conditions, whereby when the printed adhesive layer is contacted with a substrate under normal transfer conditions only non-printed areas of the adhesive adhere to the substrate so that only areas of the transferable layer corresponding to the non-printed adhesive areas are transferred to the substrate on separation of the carrier and substrate, wherein the transferable layer defines an image, the printed areas of the adhesive layer constituting a mask forming an image which is registered with the transferable layer image.

In accordance with a second aspect of the present invention, a transfer device comprises a transferable layer on a carrier, a continuous adhesive layer bonded to the transferable layer, the adhesive being selectively printed with a masking composition to provide areas which are not bondable to a substrate under normal transfer conditions, whereby only areas of the transferable layer corresponding to non-printed adhesive areas are transferred to a substrate on which the device is provided during a transfer process on separation of the carrier and substrate, wherein the transferable layer defines an image, the printed areas of the adhesive layer constituting a mask forming an image which is registered with the transferable layer image.

In connection with CH/LI, FR, IT and NL:

In accordance with one aspect of the present invention, a method of manufacturing a transfer device comprises providing a transferable layer on a carrier; providing a continuous adhesive layer bonded to the transferable layer; and selectively treating the adhesive layer to provide areas which are not bondable to a substrate under normal transfer conditions, whereby when the treated adhesive layer is contacted with a substrate under normal transfer conditions only non-treated areas of the adhesive adhere to the substrate so that only areas of the transferable layer corresponding to the non-treated adhesive areas are transferred to the substrate on separation of the carrier and substrate.

In accordance with a second aspect of the present invention, a transfer device comprises a transferable layer on a carrier, a continuous adhesive layer bonded to the transferable layer, the adhesive being selectively treated to provide areas which are not bondable to a substrate under normal transfer conditions, whereby only areas of the transferable layer corresponding to non-treated adhesive areas are transferred to a substrate on which the device is provided during a transfer process on separation of the carrier and substrate.

By 'normal transfer conditions' is meant those conditions appertaining to the placing in contact of the bondable surface of the carrier/transferable layer assembly and the bondable surface of the substrate, the adhesive bonding of the transferable layer to the substrate and the separating of the carrier from the substrate such that adhesive transfer of the transferable layer occurs only in those areas where the adhesive bonds to the substrate. The temperatures, pressures and speeds at which the process is undertaken form part of the conditions and the transfer should occur without any of the materials or their visual appearance being adversely affected.

In contrast to early attempts to lay down a patterned adhesive, we cause parts of a continuous adhesive layer not to bond to the substrate under normal transfer conditions e.g. if heat activatable adhesives are used, at elevated temperatures.

The result is that a patterned, for example holographic effect, may be readily obtained on the substrate. The pattern may also be changed readily, if necessary printing the adhesive of new holographic transfer stock with masking patterns on demand. The adhesive may be on a reflective coating of the transferable layer or perhaps spaced from it by a coating.

The method of this invention allows the benefits of adhesive coating technology which is well established, as distinct from adhesive printing technology, to be gained. We are then able, where the adhesive is dry and non-tacky at room temperature to print the adhesive coating using lithographic, letterpress or other suitable inks using printing methods including security printing methods.

In most cases, the transferable layer will include an optically variable effect generating structure. These include light diffractive eg holographic structures, light interference structures, and the optically (light) polarising structures, for example liquid crystal polymeric materials. In any event, the optically variable effect will be one which is exhibited as diffraction, interference, or polarisation under white light illumination. Diffraction offers the greatest complexity as it is possible to offer a spectrum of diffraction effects ranging from regular diffraction grating structures through diffraction grating mosaics and graphical diffraction effects (such as 2D and 2D/3D effects), to the simple or complex holographic reconstruction of objects, holograms, stereo holograms and multiplex holograms. Such diffractive structures can be created from fine line engraving, laser holography and electron beam recording methods. Computer generated diffractive patterns can be created, for example the Landis and Gyr Kinegram and the diffraction catastrophe patterns of Reserve Bank of Australia (WO/90/01733). Pixellated diffractive structures may be created by using the system described by CSIRO in WO91/03737. The diffraction effects of the present invention result from the presentation of a viewable surface which possesses a diffracting profile.

The polarisation of white light may be effected through the use of liquid crystal materials as described in AU-488652 or by using polymeric liquid crystalline material such as described in DE-A-3942663. Such materials will have relatively high molecular weights and may be applied by coating or screen printing methods.

Optically variable effects are viewable in white light although machine readable effects may be used. White light interfering patterns result from the manufacture of multiple layers of materials having different refractive indices, which are deposited at thicknesses approximately one quarter of the wavelength of light per layer. Such materials may be used directly coated on the film, or adhesively transferred to another substrate. Additionally there are known to be inks which comprise flakes of such layered structures such as described in EP-A-227423.

Special types of diffracting structure are also envisaged of the type described in EP-A-0201323 incorporated herein by reference. These transparent holograms make use of layers of for example zinc sulphide, titanium oxide(s) and zirconium (IV) oxide.

Where the diffracting transferable layer includes metallisation, this can be half-toned or continuous.

Instead of an optically variable image, the transferable layer could comprise a plain or printed metallic foil. The primary application of the invention, however, is to the use of optically variable patterns.

The printing of inks is a more widely spread practice than the printing of adhesive compositions. Adhesive compositions are more readily applied as an uninterrupted coating covering the whole of a surface. Adhesives have also to be applied in considerable thickness (relative to the thickness of printing inks) and this in turn makes the placing of fine patterns difficult. It is also difficult to form fine patterns with adhesives. For example the adhesive may be applied from a flexographic or gravure roller and this requirement limits the size of the repeat pattern as well as making the change from one pattern to another comparatively difficult.

Typically, in conventional adhesive printing, adhesive formulations would be printed by a screen printing method and this is comparatively slow as the adhesive has firstly to be applied and then dried. Adhesives are generally dried faster on a dedicated adhesive coater.

This invention has the advantage over previous methods in that there is no attempt to print with adhesive. The adhesive is applied the back of the transferable layer as a continuous layer or coating covering all of the transferable layer.

The continuous adhesive coating must be relatively even and smooth. The adhesive should be colourless or only tinted if the optically variable pattern is transparent or if it is to be viewed through the substrate.

The quantity of adhesive which will be applied will generally be about from 1 to 25gsm.

Typically, the adhesive will comprise a hot melt or other heat activatable adhesive which is not tacky at ambient temperatures. However, adhesives which are tacky at ambient temperatures could also be used although for storage and transport purposes, the adhesive coating would need to be covered by a removable protective layer.

A hot melt or heat sealable adhesive is one which becomes adhesive at elevated temperatures, generally within the range of 70 to 180°C but sets when cooled. When cooled it will firmly bond to compatible substrates. The hot melt adhesives may be ethylene-vinyl acetate copolymers, acrylics, polyurethanes, vinyl polymers or copolymers.

Transfer may be effected by placing the transfer film assembly in intimate contact with the substrate, such as under roller pressure, at elevated temperatures and then cooling the assembly before the carrier and substrate and separated. The adhesive may therefore be bonded more firmly to the substrate when it has cooled.

Hot melt adhesives are used in many hot stamping foil applications and can be applied from solution in volatile organic solvents, aqueous emulsions or by extrusion. After drying and cooling to ambient temperature the adhesive surface would not be tacky. They are thus suitable for reeling at ambient temperatures and can be printed. Hot melt adhesive coatings are relatively thick and they are useful for smoothing rough surfaces. They generally revert to the solid state after bonding to the substrate. Generally they are not plasticised.

An heat activatable adhesive is one which contains a polymer and separate plasticiser, coated, say, from an aqueous emulsion. The material may be dried at up to, say, 50°C but when heated to the activation temperature such as 100°C or above the polymer becomes highly plasticised and exhibits permanent tack. This tack is maintained when the material is cooled to ambient temperatures.

Partially cross-linked adhesive coatings which after heating will cure, can be employed.

Heat responsive, no-tack, "latent" adhesive coatings can be printed at ambient temperature and are suitable for storing on reels.

Pressure sensitive adhesive (PSA) coatings could also be used. These are tacky at room temperature and cannot be reeled or stacked without the presence of a releasable material such as a siliconised paper. The PSA coating is commonly applied to the release paper and then dried, the dried PSA coating then being laminated directly or indirectly to the acceptor material (transferable layer) to which it bonds firmly.

In a further alternative, the adhesive could be solvent activatable. For example it might be possible to soften and tackify the adhesive by using a volatile organic solvent such as Freon or its vapour but cover the solvent activatable adhesive with a non-tackifying mask such as an ultraviolet radiation curable lacquer.

In the preferred method, the treatment of the adhesive layer comprises printing the layer with a masking composition in the desired pattern.

The mask pattern may be created by normal printing methods such as by photolithography. This in itself allows much more flexibility in the designs which can be formed as well as allowing changes to be made more quickly. The technology is also readily applicable to the providing of very fine line patterns which may be printed by lithographic or gravure printing methods. Also greater control of registration between the mask pattern and the pattern on any part of the optically variable layer can be more readily controlled so that when transfer occurs the precise optically variable image can readily be positioned within the transferred layers.

The masking composition will be placed to form a continuous film over the areas where adhesion to the substrate is to be prevented. Where the adhesive coating is not tacky at ambient temperatures the adhesive properties are "latent". Such latent adhesive surfaces may be printed by contact printing means. Thus an ink film such as a lithographic ink film or letterpress ink film may be used. The thickness of such a lithographic film is unlikely to be more than 2-3 microns. Alternatively an electrostatic imaging method which causes the application of a toned image may be used such as in laser electrostatic printers. Alternatively thermal transfer film printing may be done on a thermal printer operating under electronic control. Flexographic, gravure or screen eg rotary screen printing may be used.

The masking composition will preferably comprise a rapid drying ink vehicle (binder) such as a resin or synthetic polymer. It may be deposited from solvent, emulsion, or be substantially of high solids content such as an ultraviolet radiation curable composition. Generally care must be taken not to print the adhesive under such conditions or with such materials that the unmasked adhesive becomes prematurely activated, say, through plasticisation with solvent. This early activation may not matter if the transfer is then effected on the same printing press. In general both tacky and non-tacky adhesive coatings can be treated.

The masking material may be tested for suitability for a particular purpose by applying an even film in a patterned manner to the adhesive, drying if necessary, contacting the substrate under transfer conditions (elevated temperature and pressure) and then separating the carrier from the substrate. A clean transfer of the optically variable pattern item should have occurred.

The masking patterns which may be employed comprise line patterns including lines parallel to the edge of the reel, grid patterns, fine line patterns, guilloche patterns and geometrical patterns, dots, shapes and symbols, alphanumeric characters, bar code lines and the like. These may be printed normally (as positive prints) or the opposite (i.e. negative prints).

Holographic dots are unlikely to be resolved by the eye if their maximum diameters are less than 400 microns. The distance between adjacent islands of continuous holographic film is unlikely to be less than 200 microns and the minimum width of any continuous portion of holographic film 200 microns.

At this fine resolution the optically variable pattern within the image can be difficult to see and in practice somewhat larger portions may be used where the visible appearance or machine readability of a feature within the transfer film is important.

Apart from small patterns larger shapes may be transferred such as blocks approximately 1cm by 1cm. Larger blocks may also conveniently be applied, illustrating the versatility of the method.

Any overall shape of say a symbol may be divided into a multiplicity of simultaneously or consecutively transferred parts.

Suitable transfer media may have single registered images. These images are individually recognisable and are repeated at regular intervals throughout the length of a reel. The images may then applied to register with a datum on the substrate.

In the prior art manner the adhesive would either have to be selectively deposited onto the substrate (perhaps as one of the final production acts on complexly printed security document) or the adhesive would have to be selectively deposited in patterned manner onto the back of the transfer foil.

Typically pressure contact will be made during the transfer process by a press, or roller, either of which may have a patterned surface, adding further complexity to the transferred pattern.

The manufacturing steps of the transfer device may all take place at the same location or at different locations. In the latter case, for example, a web comprising a transferable layer on a carrier which also carries a continuous adhesive layer could be provided at one site while the selective treatment, for example by printing, could take place at a second, remote site. Alternatively, the transfer device could be provided at a first site and then sent to a remote, second site where the transfer process is carried out.

With the method of this invention good registration with improved resolution can be achieved by printing the mask or pattern in register. This is a simple process. At the transfer stage the two materials can be brought together in a dry stage without necessarily activating the adhesive to check the registration before transfer is caused to occur.

Because of the slight variations in registration which may occur it is desirable to surround a single holographic image with a mask pattern which provides a perimeter around the actual holographic image. If there is then a minor shift in registration no part of the holographic image is lost, only the margin.

Apart from the use of single registered images it is possible also to apply the masking composition so as to allow multiply repeating images such as a repeated logo name to be employed. (This is apart from the repetitions which will occur by the application of a rotary plate).

Single registered images may of course be set within a repeating generic, background on the transferred surface.

Thus the invention enables the registration of the transfer pattern with points on the substrate, the registering of an image provided on a optically variable material with the adhesive pattern, and finally the registration of an image on the optically variable material with the pattern and with a datum mark on the substrate.

In the foregoing description it is to be understood that the masking composition is applied to form the negative of the holographic pattern which is to be transferred.

The transferred pattern may then be wholly or partly over printed with an ink pattern or film forming lacquer composition such as when diffractively profiled aluminium is coated with an U.V. curable protective lacquer.

The main application of the invention is to coat full webs on production equipment, although it is possible to conceive that on only part of the web there would be an hologram or other pattern to be transferred. Only over this area would adhesive be needed which could be applied as a rough block shape or a band, if not coated across the full web. Then the mask would be applied over the adhesive. Only this area then needs to be contacted with the substrate for the transfer process to work.

The invention may be used with holographic hot stamping tapes or reels (i.e. those which incorporate a wax release layer). The invention may also be used with the holographic transfer foils which incorporate releasable lacquers. In all holographic cases a metallised layer may be provided.

The invention may also be used with a lacquer free transfer foil construction, in which a carrier such as polypropylene or similar film is embossed with an optically variable diffracting pattern, optionally treated with an electrical corona discharge so as to control the release properties of the surface of the film, has a thin metallic coating applied such as aluminium to the embossed surface and is provided with a heat softenable adhesive on the metallic film. When this foil construction is brought into contact with a substrate and the adhesive is activated, removal of the carrier leaves the holographically profiled metallic film and adhesive on the substrate. Instead of an aluminium or other metal film, thin films of dielectric or refractive materials such as zinc sulphide could be used. For example, quarter wavelength thicknesses of a high refractive index material such as zinc sulphide could be used which in conjunction with a transparent adhesive will enable the transferred effect to be apparent.

Following the transfer operation, the optically variable pattern medium will be exposed to view. Optionally, following the transfer process, the optically variable pattern item may be over-printed or over-coated with a transparent coating such as an ultraviolet curable lacquer. This provides a particularly simple way of providing additional protection and for example controlling the durability.

In a further modification, where a metallised layer is provided, this may be patterned by printing or the like such as patterned aluminium.

In order to operate a preferred mode of working the invention the method is conducted with a reel of holographic transfer foil. A reel is taken as having a length of greater than 10 metres, but for production purposes will normally have a length of at least 100m.

Hot melt adhesive is applied in a solvent coating and then dried. On the same machine or on a web fed printing press the masking composition is applied and dried. Thereafter the substrate is caused to contact the transferable foil under transfer conditions the substrate being applied from a web or from sheets of A4 size upwards.

Some examples of transfer devices, methods for their manufacture and use will now be described with reference to the accompanying drawings, in which:-
Figure 1 is a schematic, cross-section, not to scale, showing a first example of a transfer device being applied to a substrate; and,
Figure 2 is a cross-section, not to scale, through a second example of a transfer device.

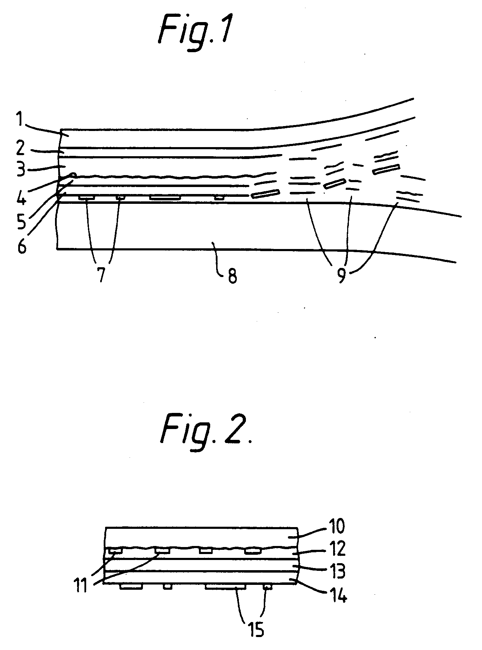

The transfer device shown in Figure 1 comprises a laminate formed by a carrier film 1 comprising polyester (eg polyethylene terephthalate) having a thickness of about 23 microns and a length greater than 100m, probably greater than 500m, or even greater than 1000m. The width is selected typically within the range 10cm to 2m. A wax release layer 2 such as carnauba wax or microcrystalline wax is provided on the carrier 1. Alternatively, a releasable and embossable polyvinyl butyral layer may be used.

An embossable lacquer layer 3 is coated on the wax release layer 2, the lacquer comprising thermoplastics or partially thermoset polymers or copolymers such as acrylic, vinyl, polyurethane, polyester, or nitrocellulose. The layer is holographically embossed on its surface 4 with an holographically profiled nickel shim (not shown) under elevated temperature and roller pressure conditions, eg 120 to 160°C.

This holographically embossed surface could be printed with either discrete, foreground images or background images. This printing is not shown in Figure 1. The surface is then reflectively coated with a thin metallic layer of for example aluminium (opaque) or zinc sulphide (for transparency) using a vapour deposition method to provide reflective layer 5.

Optionally, this reflective layer could then be printed, for example with security indicia, and/or provided with a lacquer coating. In the present case, however, the metallic layer is coated with an adhesive, for example hot meltable or heat activatable adhesive eg comprising vinyl polymers and copolymers covering all of the reflective area to generate an adhesive layer 6.

Finally, the adhesive layer 6 is printed with a masking composition as shown schematically at 7. The masking composition typically has a thickness in the range 2-8 microns and is printed by for example offset lithography using UV curable lacquer or letterpress using alkyd or UV curable acrylic ink. Coarser resolution may be obtained by using screen printing. Gravure or flexographic printing may also be employed. Thinner layers allow better transfer pattern resolution.

Transfer may be initiated by rolling the masked adhesive surface 6 on a substrate 8 at 120 to 180 degrees celsius, at low to medium pressure as determined by the nature of the substrate. The composite is then cooled with air and the carrier film stripped away from the substrate 8 as shown.

This results in a finely transferred holographic pattern 9 which through facile registration can be placed beside security printed features with a consistency and attainment rate not readily achievable by stamping methods.

Figure 2 illustrates a second example of a transfer device comprising a holographically embossed PVC or Polypropylene carrier film 10 which optionally undergoes corona treatment of the holographically embossed surface to enhance bonding. This surface is optionally releasably printed at 11 and coated with a reflective metallic or refractive layer 12 eg aluminium or zinc sulphide. A lacquer layer 13 is provided followed by an adhesive layer 14 which is printed 15 with masking composition, as before.

On transfer the bare metal surface 12 will have released from the embossed PVC or polypropylene carrier 10. This may then be lacquered over including with a fluorescent dye containing lacquer or printed over to provide additional protection. Alternatively it could be just left as it is eg on documents which are not subjected to harsh treatment such as cheques.

The transferable optically variable pattern items described above may be applied to any suitable planar surfaced substrates such as paper including rag paper, surface finished paper such as resin coated paper, lacquer coated paper, synthetic paper (including non-woven paper and spun bonded paper), plastic films, paper plastic laminates, metallised plastics, metallic foils, metallic foil clad paper, metallic sheeting such as aluminium sheeting, glass, ceramics and the like. In particular as authenticatable devices holographic images may be applied to security documents such as bank cheques, travellers cheques, plastic cards, passport covers, bonds, share certificates, licences, passes, tickets, vouchers, permits, valuable document such as legal documents, and the like.

In addition to transfer onto the web by a hot rolling method during production, smaller areas may be transferred. Transfer may be effected using a hot press eg. hot iron or heated rollers, preferably to a high quality, smooth surface. Alternatively a masked self-adhesive transfer film may be used. Such materials may be used for providing verification marks or seals to documents including original documents bearing signatures.

An advantage of the invention is that it allows a stock of holographic material to be prepared, this having no adhesive mask. Printing of the mask pattern can then occur on demand.

Apart from large reels to be used in continuous production of cheques, tickets and the like, there is the possibility of using narrow tape formats delivered from a reel, cut to document size or made even shorter for example to authenticate a small area of a document. This might for example cover an area of text, perhaps providing see through verification rather like the passport over laminate film provides. Alternatively the material may be delivered in sheet form so that whole documents could be covered.

In one embodiment a web of adhesively coated holographic transfer film supported on a carrier may be printed with the masking composition on a lithographic printing press and when the composition is dry such as after exposure to ultraviolet light or hot air, the masked adhesive surface may be immediately hot rolled in contact with a previously printed substrate so as to achieve transfer contact between the two materials and thereafter the carrier may be immediately stripped away so as to leave the holographically patterned substrate.

Printing press registration control means will be used to achieve registration between the donor and acceptor webs.

The treatment of the adhesive to render the treated areas non-transferable under normal transfer conditions may be undertaken by a variety of methods such as by contact or non-contact printing of inks, lacquers and the like but may also be as the result of the printing of a releasable composition such as a silicone polymer. Other methods of deactivating may be employed in exceptional circumstances such as the application of fine powders or the laminating of thin films which may be perforated.

## Claims (Claims for the following Contracting State(s): DE)

1. A method of manufacturing a transfer device, the method comprising providing a transferable layer (3) on a carrier (1); providing a continuous adhesive layer (6) bonded to the transferable layer; and selectively printing the adhesive layer with a masking composition (7) to provide areas which are not bondable to a substrate under normal transfer conditions, whereby when the printed adhesive layer is contacted with a substrate (8) under normal transfer conditions only non-printed areas of the adhesive adhere to the substrate so that only areas of the transferable layer corresponding to the non-printed adhesive areas are transferred to the substrate on separation of the carrier and substrate wherein the transferable layer (3) defines an image, the printed areas (7) of the adhesive layer (6) constituting a mask forming an image which is registered with the transferable layer image.

2. A method according to claim 1, wherein the transferable layer (3) includes an optically variable structure.

3. A method according to claim 2, wherein the optically variable structure comprises a light diffractive structure.

4. A method according to claim 2 or claim 3, wherein the transferable layer (3) is embossed and metallised to define a hologram.

5. A method according to claim 2 or claim 3, wherein the transferable layer (3) is embossed and provided with a refractive layer, such as zinc sulphide, to define a hologram.

6. A method according to claim 2 or claim 3, wherein the transferable layer (3) comprises multi-layer light interfering structure.

7. A method according to any of the preceding claims, wherein the printing step comprises lithographic, flexographic, gravure, letterpress, screen, electrostatic or film transfer printing.

8. A method according to any of the preceding claims, wherein the masking composition (7) comprises a rapid drying ink vehicle such as a resin or synthetic polymer.

9. A method according to any of the preceding claims, wherein the adhesive (6) is printed to define a pattern (7) which on transfer would comprise one or more of line patterns, guilloche patterns and geometrical patterns, dots, shapes and symbols, and alphanumeric characters.

10. A method according to any of the preceding claims, wherein the adhesive (6) is a hot melt or heat activatable adhesive.

11. A method according to any of the preceding claims, wherein the adhesive (6) is coated directly on a reflective coating (5) of the transferable layer.

12. A method according to any of the preceding claims, wherein the transferable layer (3) possesses a visible image, the printed areas of the adhesive layer (6) constituting a mask forming an image which is registered with the transferable layer image.

13. A method according to any of the preceding claims, wherein the transfer device is wound as a length of stock on to a reel.

14. A transfer device comprising a transferable layer (3) on a carrier (1), a continuous adhesive layer (6) bonded to the transferable layer, the adhesive being selectively printed with a masking composition (7) to provide areas which are not bondable to a substrate under normal transfer conditions, whereby only areas of the transferable layer corresponding to non-printed adhesive areas are transferred to a substrate on which the device is provided during a transfer process on separation of the carrier and substrate, wherein the transferable layer (3) defines an image, the printed areas (7) of the adhesive layer (6) constituting a mask forming an image which is registered with the transferable layer image.

15. A device according to claim 14, wherein the transferable layer (3) includes an optically variable structure.

16. A device according to claim 15, wherein the optically variable structure comprises a hologram.

17. A device according to claim 15 or claim 16, wherein the transferable layer (3) is embossed and metallised to define a hologram.

18. A device according to claim 15 or claim 16, wherein the transferable layer (3) is embossed and provided with a refractive layer, such as zinc sulphide, to define a hologram.

19. A device according to claim 15 or claim 16, wherein the transferable layer (3) comprises a multi-layer light interfering structure.

20. A device according to any of claims 14 to 19, wherein the printing step comprises lithographic, flexographic, gravure, letterpress, screen, electrostatic or film transfer printing.

21. A device according to any of claims 14 to 20, wherein the masking composition (7) comprises a rapid drying ink vehicle such as a resin or synthetic polymer.

22. A device according to any of claims 14 to 21, wherein the adhesive (6) is printed to define a pattern comprising one or more of line patterns, guilloche patterns and geometrical patterns, dots, shapes and symbols, and alphanumeric characters.

23. A device according to any of claims 14 to 22, wherein the adhesive (6) is a hot melt or heat activatable adhesive.

24. A device according to any of claims 14 to 23, wherein the adhesive (6) is coated directly on a reflective coating (5) of the transferable layer (3).

25. A device according to any of claims 14 to 24, the device being in the form of a length of stock wound on a reel.

26. A transfer process comprising providing a transfer device according to any of claims 14 to 25 or manufactured according to any of claims 1 to 13, on a substrate (8) so that the adhesive layer (6) contacts the substrate and non-printed areas of the adhesive adhere to the substrate; and separating the carrier (1) from the substrate (8) whereby only areas of the transferable layer (3) corresponding to non-printed adhesive areas are transferred to the substrate, wherein the printed areas of the adhesive (6) define an image, the device being provided on the substrate (8) so that the printed adhesive image registers with an image on the substrate.

27. A process according to claim 26, wherein the substrate (8) is chosen from paper including rag paper, surface finished paper such as resin coated paper, lacquer coated paper, non-woven paper, spun bonded paper, other synthetic paper plastic films, paper plastic laminates, metallised plastics, metallic foils, metallic foil clad paper, metallic sheeting such as aluminium sheeting, glass, and ceramics.

28. A process according to claim 26 or claim 27, wherein the substrate (8) comprises a security document.

29. A process according to any of claims 26 to 28, in which the transferred areas are then wholly or partly overprinted with a printing composition such as a printing ink or a film forming lacquer composition.

## Claims (Claims for the following Contracting State(s): CH, LI, FR, IT, NL)

1. A method of manufacturing a transfer device, the method comprising providing a transferable layer (3) on a carrier (1); providing a continuous adhesive layer (6) bonded to the transferable layer (3); and selectively treating the adhesive layer (6) to provide areas which are not bondable to a substrate under normal transfer conditions, whereby when the treated adhesive layer is contacted with a substrate (8) under normal transfer conditions only non-treated areas of the adhesive adhere to the substrate so that only areas of the transferable layer corresponding to the non-treated adhesive areas are transferred to the substrate on separation of the carrier and substrate.

2. A method according to claim 1, wherein the transferable layer (3) includes an optically variable structure.

3. A method according to claim 2, wherein the optically variable structure comprises a light diffractive structure.

4. A method according to claim 2 or claim 3, wherein the transferable layer (3) is embossed and metallised to define a hologram.

5. A method according to claim 2 or claim 3, wherein the transferable layer (3) is embossed and provided with a refractive layer, such as zinc sulphide, to define a hologram.

6. A method according to claim 2 or claim 3, wherein the transferable layer (3) comprises multi-layer light interfering structure.

7. A method according to any of the preceding claims, wherein the adhesive coating is selectively treated by printing with a masking composition (7).

8. A method according to claim 7, wherein the printing step comprises lithographic, flexographic, gravure, letterpress, screen, electrostatic or film transfer printing.

9. A method according to claim 7 or claim 8, wherein the masking composition (7) comprises a rapid drying ink vehicle such as a resin or synthetic polymer.

10. A method according to any of the preceding claims, wherein the adhesive (6) is selectively treated to define a pattern (7) which on transfer would comprise one or more of line patterns, guilloche patterns and geometrical patterns, dots, shapes and symbols, and alphanumeric characters.

11. A method according to any of the preceding claims, wherein the adhesive (6) is a hot melt or heat activatable adhesive.

12. A method according to any of the preceding claims, wherein the adhesive (6) is coated directly on a reflective coating (5) of the transferable layer.

13. A method according to any of the preceding claims, wherein the transferable layer (3) possesses a visible image, the selectively treated areas of the adhesive layer (6) constituting a mask forming an image which is registered with the transferable layer image.

14. A transfer device comprising a transferable layer (3) on a carrier (1), a continuous adhesive layer (6) bonded to the transferable layer, the adhesive being selectively treated to provide areas which are not bondable to a substrate under normal transfer conditions, whereby only areas of the transferable layer corresponding to non-treated adhesive areas are transferred to a substrate on which the device is provided during a transfer process on separation of the carrier and substrate.

15. A device according to claim 14, wherein the transferable layer (3) includes an optically variable structure.

16. A device according to claim 15, wherein the optically variable structure comprises a hologram.

17. A device according to claim 15 or claim 16, wherein the transferable layer (3) is embossed and metallised to define a hologram.

18. A device according to claim 15 or claim 16, wherein the transferable layer (3) is embossed and provided with a refractive layer, such as zinc sulphide, to define a hologram.

19. A device according to claim 15 or claim 16, wherein the transferable layer (3) comprises a multi-layer light interfering structure.

20. A device according to any of claims 14 to 19, wherein the adhesive coating is selectively treated by printing with a masking composition (7).

21. A device according to claim 20, wherein the printing step comprises lithographic, flexographic, gravure, letterpress, screen, electrostatic or film transfer printing.

22. A device according to claim 20 or claim 21, wherein the masking composition (7) comprises a rapid drying ink vehicle such as a resin or synthetic polymer.

23. A device according to any of claims 14 to 22, wherein the adhesive (6) is selectively treated to define a pattern comprising one or more of line patterns, guilloche patterns and geometrical patterns, dots, shapes and symbols, and alphanumeric characters.

24. A device according to any of claims 14 to 23, wherein the adhesive (6) is a hot melt or heat activatable adhesive.

25. A device according to any of claims 14 to 24, wherein the adhesive (6) is coated directly on a reflective coating (5) of the transferable layer (3).

26. A device according to any of claims 14 to 25, wherein the transferable layer (3) defines an image, the selectively treated areas (7) of the adhesive layer (6) constituting a mask forming an image which is registered with the transferable layer image.

27. A device according to any of claims 14 to 26 in the form of a length of stock wound on a reel.

28. A transfer process comprising providing a transfer device according to any of claims 14 to 27 or manufactured according to any of claims 1 to 13, on a substrate (8) so that the adhesive layer (6) contacts the substrate and non-treated areas of the adhesive adhere to the substrate; and separating the carrier (1) from the substrate whereby only areas of the transferable layer (3) corresponding to non-treated adhesive areas are transferred to the substrate.

29. A process according to claim 28, wherein the treated areas of the adhesive (6) define an image, the device being provided on the substrate (8) so that the treated adhesive image registers with an image on the substrate.

30. A process according to claim 28 or claim 29, wherein the substrate (8) is chosen from paper including rag paper, surface finished paper such as resin coated paper, lacquer coated paper, non-woven paper, spun bonded paper, other synthetic paper, plastic films, paper plastic laminates, metallised plastics, metallic foils, metallic foil clad paper, metallic sheeting such as aluminium sheeting, glass, and ceramics.

31. A process according to any of claims 28 to 30, wherein the substrate (8) comprises a security document.

32. A process according to any of claims 28 to 31, in which the transferred areas are then wholly or partly overprinted with a printing composition such as a printing ink or a film forming lacquer composition.

## Patentansprüche (Patentansprüche für folgende(n) Vertragsstaat(en): DE)

1. Verfahren zur Herstellung einer Übertragungsvorrichtung, bei dem eine übertragbare Schicht (3) auf einem Träger (1) ausgebildet, eine kontinuierliche Klebstoffschicht (6) an der übertragbaren Schicht (3) angeklebt und die Klebstoffschicht selektiv mit einer Abdeckungszusammensetzung (7) bedruckt wird, um Bereiche zu bilden, die unter normalen Übertragungsbedingungen nicht an einem Substrat haften, wobei, wenn die bedruckte Klebstoffschicht unter normalen Übertragungsbedingungen mit einem Substrat (8) in Berührung gebracht wird, nur unbedruckte Bereiche des Klebstoffs am Substrat haften, so daß nur diejenigen Bereiche der übertragbaren Schicht, die den unbedruckten Klebstoffbereichen entsprechen, bei einer Trennung von Träger und Substrat auf das Substrat übertragen werden, wobei die übertragbare Schicht (3) ein Bild begrenzt und die bedruckten Bereiche (7) der Klebstoffschicht (6) eine Abdeckung (Maske) bilden, die ein Bild darstellt, das mit dem übertragbaren Schichtbild registerhaltig ist.

2. Verfahren nach Anspruch 1, bei dem die übertragbare Schicht (3) eine optisch veränderbare Struktur aufweist.

3. Verfahren nach Anspruch 2, bei dem die optisch veränderbare Struktur eine Lichtbeugungsstruktur aufweist.

4. Verfahren nach Anspruch 2 oder Anspruch 3, bei dem die übertragbare Schicht (3) geprägt und metallisiert wird, um ein Hologramm zu bilden.

5. Verfahren nach Anspruch 2 oder Anspruch 3, bei dem die übertragbare Schicht (3) geprägt und mit einer Brechungsschicht versehen wird, z.B. aus Zinksulfid, um ein Hologramm zu bilden.

6. Verfahren nach Anspruch 2 oder Anspruch 3, bei dem die übertragbare Schicht (3) eine mehrschichtige Lichtinterferierungsstruktur aufweist.

7. Verfahren nach einem der vorstehenden Ansprüche, bei dem das Bedrucken ein lithografisches, flexografisches, Gravur-, Hochdruck-, Siebdruck-, elektrostatisches oder Filmübertragungs-Druckverfahren umfaßt.

8. Verfahren nach einem der vorstehenden Ansprüche, bei dem die Abdeckungszusammensetzung (7) ein rasch trocknendes Tinten-Bindemittel, z.B. Harz oder ein synthetisches Polymer, aufweist.

9. Verfahren nach einem der vorstehenden Ansprüche, bei dem der Klebstoff (6) so aufgedruckt wird, daß er ein Muster (7) bildet, das bei der Übertragung ein oder mehrere Linienmuster, Guillochen-Muster und geometrische Muster, Punkte, Formen und Symbole und alphanumerische Zeichen aufweist.

10. Verfahren nach einem der vorstehenden Ansprüche, bei dem der Klebstoff (6) ein Schmelz- oder heißaktivierbarer Klebstoff ist.

11. Verfahren nach einem der vorstehenden Ansprüche, bei dem der Klebstoff (6) direkt auf einen reflektierenden Überzug (5) der übertragbaren Schicht als Überzug aufgetragen wird.

12. Verfahren nach einem der vorstehenden Ansprüche, bei dem die übertragbare Schicht (3) ein sichtbares Bild aufweist und die bedruckten Bereiche der Klebstoffschicht (6) eine Maske in Form eines Bildes bilden, das mit dem übertragbaren Schichtbild registerhaltig ist.

13. Verfahren nach einem der vorstehenden Ansprüche, bei dem die Übertragungsvorrichtung als Materialbahn auf eine Spule gewickelt wird.

14. Übertragungsvorrichtung mit einer übertragbaren Schicht (3) auf einem Träger (1), einer kontinuierlichen Klebstoffschicht (6), die an der übertragbaren Schicht angeklebt ist, wobei der Klebstoff selektiv mit einer Abdeckzusammensetzung (7) bedruckt ist, um Bereiche zu bilden, die unter normalen Übertragungsbedingungen nicht an einem Substrat haften, so daß nur diejenigen Bereiche der übertragbaren Schicht, die nicht bedruckten Klebstoffbereichen entsprechen, auf ein Substrat übertragen werden, auf das die Vorrichtung bei einem Übertragungsvorgang unter Trennung von Träger und Substrat aufgebracht wird, wobei die übertragbare Schicht (3) ein Bild bildet und die bedruckten Bereiche (7) der Klebstoffschicht (6) eine Abdeckung (Maske) bilden, die ein Bild darstellt, das mit dem übertragbaren Schichtbild registerhaltig ist.

15. Vorrichtung nach Anspruch 14, bei der die übertragbare Schicht (3) eine optisch veränderbare Struktur aufweist.

16. Vorrichtung nach Anspruch 15, bei der die optisch veränderbare Struktur ein Hologramm aufweist.

17. Vorrichtung nach Anspruch 15 oder Anspruch 16, bei der die übertragbare Schicht (3) geprägt und metallisiert ist, um ein Hologramm zu bilden.

18. Vorrichtung nach Anspruch 15 oder Anspruch 16, bei der die übertragbare Schicht (3) geprägt und mit einer Brechungsschicht, z.B. aus Zinksulfid, versehen ist, um ein Hologramm zu bilden.

19. Vorrichtung nach Anspruch 15 oder Anspruch 16, bei der die übertragbare Schicht (3) eine mehrschichtige Lichtinterferierungsstruktur aufweist.

20. Vorrichtung nach einem der Ansprüche 14 bis 19, bei der der Aufdruck einen lithografischen, flexografischen, Gravur-, Hochdruck, Siebdruck, elektrostatischen oder Filmübertragungsdruck aufweist.

21. Vorrichtung nach einem der Ansprüche 14 bis 20, bei der die Abdeckungszusammensetzung (7) ein rasch trocknendes Tinten-Bindemittel, z.B. ein Harz oder synthetisches Polymer, aufweist.

22. Vorrichtung nach einem der Ansprüche 14 bis 21, bei der der Klebstoff (6) bedruckt ist, um ein Muster zu bilden, das ein oder mehrere Linienmuster, Guillochenmuster und geometrische Muster, Punkte, Formen und Symbole sowie alphanumerische Zeichen aufweist.

23. Vorrichtung nach einem der Ansprüche 14 bis 22, bei der der Klebstoff (6) ein Schmelz- oder heiß aktivierbarer Klebstoff ist.

24. Vorrichtung nach einem der Ansprüche 14 bis 23, bei der der Klebstoff (6) direkt auf einen reflektierenden Überzug (5) der übertragbaren Schicht (3) als Überzug aufgebracht ist.

25. Vorrichtung nach einem der Ansprüche 14 bis 24, bei der die Vorrichtung eine Materialbahn bildet, die auf einer Spule aufgewickelt ist.

26. Übertragungsverfahren, das die Ausbildung einer Übertragungsvorrichtung nach einem der Ansprüche 14 bis 25 oder einer nach einem der Ansprüche 1 bis 13 hergestellten Übertragungsvorrichtung auf einem Substrat (8), so daß die Klebstoffschicht (6) das Substrat berührt und unbedruckte Bereiche des Klebstoffs am Substrat haften, und das Trennen des Trägers (1) vom Substrat (8) umfaßt, so daß nur diejenigen Bereiche der übertragbaren Schicht (3), die unbedruckten Klebstoffbereichen entsprechen, auf das Substrat übertragen werden, wobei die bedruckten Bereiche des Klebstoffs (6) ein Bild bilden und die Vorrichtung auf dem Substrat (8) so ausgebildet wird, daß das bedruckte Klebstoffbild mit einem Bild auf dem Substrat registerhaltig ist.

27. Übertragungsverfahren nach Anspruch 26, bei dem das Substrat (8) ausgewählt ist aus Papier, einschließlich Lumpenpapier, oberflächenbehandeltes Papier, z.B. mit Harz überzogenes Papier, mit Lack überzogenes Papier, Papiervlies, gespinstgebundenes Papier, anderes synthetisches Papier, Kunststoffilme, Papier-Kunststoff-Laminate, metallisierte Kunststoffe, Metallfolien, mit einer Metallfolie kaschiertes Papier, Metallblech, z.B. Aluminiumblech, Glas und Keramik.

28. Übertragungsverfahren nach Anspruch 26 oder Anspruch 27, bei dem das Substrat (8) ein Sicherheitsdokument aufweist.

29. Übertragungsverfahren nach einem der Ansprüche 26 bis 28, bei dem die übertragenen Bereiche dann als ganzes oder teilweise mit einer Druckzusammensetzung, z.B. einer Druckfarbe oder einer einen Film bildenden Lack-Zusammensetzung, bedruckt werden.

## Patentansprüche (Patentansprüche für folgende(n) Vertragsstaat(en): CH, LI, FR, IT, NL)

1. Verfahren zur Herstellung einer Übertragungsvorrichtung, bei dem eine übertragbare Schicht (3) auf einem Träger (1) ausgebildet, eine kontinuierliche Klebstoffschicht (6) an der übertragbaren Schicht (3) angeklebt und die Klebstoffschicht selektiv behandelt wird, um Bereiche zu bilden, die unter normalen Übertragungsbedingungen nicht an einem Substrat haften, wobei, wenn die behandelte Klebstoffschicht unter normalen Übertragungsbedingungen mit einem Substrat in Berührung gebracht wird, nur unbehandelte Bereiche des Klebstoffs am Substrat haften, so daß nur diejenigen Bereiche der übertragbaren Schicht, die den unbehandelten Klebstoffbereichen entsprechen, bei einer Trennung von Träger und Substrat auf das Substrat übertragen werden.

2. Verfahren nach Anspruch 1, bei dem die übertragbare Schicht (3) eine optisch veränderbare Struktur aufweist.

3. Verfahren nach Anspruch 2, bei dem die optisch veränderbare Struktur eine Lichtbeugungsstruktur aufweist.

4. Verfahren nach Anspruch 2 oder Anspruch 3, bei dem die übertragbare Schicht (3) geprägt und metallisiert wird, um ein Hologramm zu bilden.

5. Verfahren nach Anspruch 2 oder Anspruch 3, bei dem die übertragbare Schicht (3) geprägt und mit einer Brechungsschicht versehen wird, z.B. aus Zinksulfid, um ein Hologramm zu bilden.

6. Verfahren nach Anspruch 2 oder Anspruch 3, bei dem die übertragbare Schicht (3) eine mehrschichtige Lichtinterferierungsstruktur aufweist.

7. Verfahren nach einem der vorstehenden Ansprüche, bei dem der Klebstoffüberzug selektiv durch Bedrucken mit einer Abdeckungszusammensetzung (7) behandelt wird.

8. Verfahren nach Anspruch 7, bei dem das Bedrucken ein lithografisches, flexografisches, Gravur-, Hochdruck-, Siebdruck-, elektrostatisches oder Filmübertragungs-Druckverfahren umfaßt.

9. Verfahren nach Anspruch 7 oder Anspruch 8, bei dem die Abdeckungszusammensetzung ein rasch trocknendes Tinten-Bindemittel, z.B. Harz oder ein synthetisches Polymer, aufweist.

10. Verfahren nach einem der vorstehenden Ansprüche, bei dem der Klebstoff (6) selektiv behandelt wird, um ein Muster (7) zu bilden, das bei der Übertragung ein oder mehrere Linienmuster, Guillochenmuster und geometrische Muster, Punkte, Formen und Symbole sowie alphanumerische Zeichen aufweist.

11. Verfahren nach einem der vorstehenden Ansprüche, bei dem der Klebstoff (6) ein Schmelz-Klebstoff oder ein heißaktivierbarer Klebstoff ist.

12. Verfahren nach einem der vorstehenden Ansprüche, bei dem der Klebstoff (6) direkt auf einen reflektierenden Überzug (5) der übertragbaren Schicht als Überzug aufgetragen wird.

13. Verfahren nach einem der vorstehenden Ansprüche, bei dem die übertragbare Schicht (3) ein sichtbares Bild aufweist und die selektiv behandelten Bereiche der Klebstoffschicht (6) eine Abdeckung (Maske) in Form eines Bildes bilden, das mit dem übertragbaren Schichtbild registerhaltig ist.

14. Übertragungsvorrichtung mit einer übertragbaren Schicht (3) auf einem Träger (1) und einer kontinuierlichen Klebstoffschicht (6), die an der übertragbaren Schicht angeklebt ist, wobei der Klebstoff selektiv behandelt ist, um Bereiche zu bilden, die unter normalen Übertragungsbedingungen nicht an einem Substrat haften, so daß nur diejenigen Bereiche der übertragbaren Schicht, die unbehandelten Bereichen entsprechen, auf ein Substrat übertragen werden, auf das die Vorrichtung bei einem Übertragungsvorgang unter Trennung von Träger und Substrat aufgebracht wird.

15. Vorrichtung nach Anspruch 14, bei der die übertragbare Schicht (3) eine optisch veränderbare Struktur aufweist.

16. Vorrichtung nach Anspruch 15, bei der die optisch veränderbare Struktur ein Hologramm aufweist.

17. Vorrichtung nach Anspruch 15 oder Anspruch 16, bei der die übertragbare Schicht (3) geprägt und metallisiert ist, um ein Hologramm zu bilden.

18. Vorrichtung nach Anspruch 15 oder Anspruch 16, bei der die übertragbare Schicht (3) geprägt und mit einer Brechungsschicht, z.B. aus Zinksulfid, versehen ist, um ein Hologramm zu bilden.

19. Vorrichtung nach Anspruch 15 oder Anspruch 16, bei der die übertragbare Schicht (3) eine mehrschichtige Lichtinterferierungsstruktur aufweist.

20. Vorrichtung nach einem der Ansprüche 14 bis 19, bei der der Klebstoffüberzug selektiv durch Aufdrucken einer Abdeckungszusammensetzung (7) behandelt ist.

21. Vorrichtung nach Anspruch 20, bei der das Bedrucken ein lithografisches, flexografisches, Gravur-, Hochdruck-, Siebdruck-, elektrostatisches oder Filmübertragungs-Druckverfahren umfaßt.

22. Vorrichtung nach Anspruch 20 oder Anspruch 21, bei der die Abdeckungszusammensetzung (7) ein rasch trocknendes Tinten-Bindemittel, z.B. ein Harz oder synthetisches Polymer, aufweist.

23. Vorrichtung nach einem der Ansprüche 14 bis 22, bei der der Klebstoff (6) selektiv behandelt ist, um ein Muster zu bilden, das ein oder mehrere Linienmuster, Guillochenmuster und geometrische Muster, Punkte, Formen und Symbole sowie alphanumerische Zeichen aufweist.

24. Vorrichtung nach einem der Ansprüche 14 bis 23, bei der der Klebstoff (6) ein Schmelz- oder heiß aktivierbarer Klebstoff ist.

25. Vorrichtung nach einem der Ansprüche 14 bis 24, bei der der Klebstoff (6) direkt auf einen reflektierenden Überzug (5) der übertragbaren Schicht (3) als Überzug aufgebracht ist.

26. Vorrichtung nach einem der Ansprüche 14 bis 25, bei der die übertragbare Schicht (3) ein Bild bildet und die selektiv behandelten Bereiche (7) der Klebstoffschicht (6) eine Abdeckung (Maske) in Form eines Bildes darstellen, das mit dem übertragbaren Schichtbild registerhaltig ist.

27. Vorrichtung nach einem der Ansprüche 14 bis 26 in Form einer auf eine Spule gewickelten Materialbahn.

28. Übertragungsverfahren, das die Ausbildung einer Übertragungsvorrichtung nach einem der Ansprüche 14 bis 27 oder einer nach einem der Ansprüche 1 bis 13 hergestellten Übertragungsvorrichtung auf einem Substrat (8), so daß die Klebstoffschicht (6) das Substrat berührt und unbehandelte Bereiche des Klebstoffs am Substrat haften, und das Trennen des Trägers (1) vom Substrat (8) umfaßt, so daß nur diejenigen Bereiche der übertragbaren Schicht (3) die unbehandelten Klebstoffbereichen entsprechen, auf das Substrat übertragen werden.

29. Übertragungsverfahren nach Anspruch 28, bei dem die behandelten Bereiche des Klebstoffs (6) ein Bild darstellen und die Vorrichtung auf dem Substrat (8) ausgebildet wird, so daß das behandelte Klebstoffbild mit einem Bild auf dem Substrat registerhaltig ist.

30. Übertragungsverfahren nach Anspruch 28 oder Anspruch 29, bei dem das Substrat (8) ausgewählt ist aus Papier, einschließlich Lumpenpapier, oberflächenbehandeltes Papier, z.B. mit Harz überzogenes Papier, mit Lack überzogenes Papier, Papiervlies, gespinstgebundenes Papier, anderes synthetisches Papier, Kunststoffilme, Papier-Kunststoff-Laminate, metallisierte Kunststoffe, Metallfolien, mit einer Metallfolie kaschiertes Papier, Metallblech, z.B. Aluminiumblech, Glas und Keramik.

31. Übertragungsverfahren nach einem der Ansprüche 28 bis 30, bei dem das Substrat (8) ein Sicherheitsdokument aufweist.

32. Übertragungsverfahren nach einem der Ansprüche 28 bis 31, bei dem die übertragenen Bereiche dann als ganzes oder teilweise mit einer Druckzusammensetzung, z.B. einer Druckfarbe oder einer einen Film bildenden Lack-Zusammensetzung, bedruckt werden.

## Revendications (Revendications pour l'(les) Etat(s) contractant(s) suivant(s): DE)

1. Procédé de fabrication d'un dispositif de report, le procédé comprenant la disposition d'une couche reportable (3) sur un support (1), la disposition d'une couche adhésive continue (6) liée à la couche reportable (3), et l'impression sélective d'une composition de masquage sur la couche adhésive (6) pour la formation de zones qui ne peuvent pas être liées à un substrat dans les conditions normales de report, si bien que, lorsque la couche adhésive imprimée est mise au contact d'un substrat (8) dans les conditions normales de report, seules les zones non imprimées de l'adhésif adhèrent au substrat et que seules les zones de la couche reportable correspondant aux zones adhésives non imprimées sont reportées sur le substrat lors de la séparation du support et du substrat, et la couche reportable (3) délimite une image, les zones imprimées (7) de la couche adhésive (6) constituant un masque formant une image qui est positionnée par rapport à l'image de la couche reportable.

2. Procédé selon la revendication 1, dans lequel la couche reportable (3) a une structure optiquement variable.

3. Procédé selon la revendication 2, dans lequel la structure optiquement variable est une structure qui diffracte la lumière.

4. Procédé selon la revendication 2 ou 3, dans lequel la couche reportable (3) est gaufrée et métallisée afin qu'elle délimite un hologramme.

5. Procédé selon la revendication 2 ou 3, dans lequel la couche reportable (3) est gaufrée et a une couche de réfraction, par exemple de sulfure de zinc, destinée à délimiter un hologramme.

6. Procédé selon la revendication 2 ou 3, dans lequel la couche reportable (3) a une structure multicouche provoquant des interférences de la lumière.

7. Procédé selon l'une quelconque des revendications précédentes, dans lequel l'étape d'impression est une impression lithographique, à l'aniline, par photogravure, typographique, par sérigraphie, électrostatique ou par report d'un film.

8. Procédé selon l'une quelconque des revendications précédentes, dans lequel la composition de masquage (7) contient un véhicule à séchage rapide pour l'encre, par exemple une résine ou un polymère synthétique.

9. Procédé selon l'une quelconque des revendications précédentes, dans lequel l'adhésif (6) est imprimé séletivement pour la délimitation d'un motif (7) qui, lors du report, comporte un ou plusieurs motifs de lignes, motifs guillochés et motifs géométriques, des points, des graphiques et symboles, et des caractères alphanumériques.

10. Procédé selon l'une quelconque des revendications précédentes, dans lequel l'adhésif (6) est un adhésif thermofusible ou activé par la chaleur.

11. Procédé selon l'une quelconque des revendications précédentes, dans lequel l'adhésif (6) et revêtu directement sur un revêtement réfléchissant (5) de la couche reportable.

12. Procédé selon l'une quelconque des revendications précédentes, dans lequel la couche reportable (3) possède une image visible, les zones imprimées sélectivement de la couche adhésive (6) constituant un masque qui forme une image qui est positionnée sur l'image à couche reportable.

13. Procédé selon l'une quelconque des revendications précédentes, dans lequel le dispositif de report est enroulé sous forme d'un tronçon de matériau sur un rouleau.

14. Dispositif de report comprenant une couche reportable (3) sur un support (1), une couche adhésive continue (6) liée à la couche reportable, l'adhésif étant imprimé sélectivement par une composition de masquage (7) afin qu'il forme des zones qui ne peuvent pas se lier à un substrat dans les conditions normales de report, si bien que seules des zones de la couche reportable qui correspondent aux zones adhésives non imprimées sont reportées sur un substrat sur lequel le dispositif est placé lors d'une opération de report après séparation du support et du substrat, et la couche reportable (3) délimite une image, les zones imprimées (7) de la couche adhésive (6) constituant un masque formant une image qui est positionnée par rapport à l'image de la couche reportable.

15. Dispositif selon la revendication 14, dans lequel la couche reportable (3) contient une structure optiquement variable.

16. Dispositif selon la revendication 15, dans lequel la structure optiquement variable est un hologramme.

17. Dispositif selon la revendication 15 ou 16, dans lequel la couche reportable (3) est gaufrée et métallisée pour délimiter un hologramme.

18. Dispositif selon la revendication 15 ou 16, dans lequel la couche reportable (3) est gaufrée et possède une couche de réfraction, par exemple de sulfure de zinc, destinée à délimiter un hologramme.

19. Dispositif selon la revendication 15 ou 16, dans lequel la couche reportable (3) est une structure multicouche provoquant des interférences de la lumière.

20. Dispositif selon l'une quelconque des revendications 14 à 19, dans lequel l'étape d'impression est réalisée par impression lithographique, à l'aniline, par photogravure, typographique, par sérigraphie, électrostatique ou par report d'un film.

21. Dispositif selon l'une quelconque des revendications 14 à 20, dans lequel la composition de masquage (7) contient un véhicule à séchage rapide pour l'encre, par exemple une résine ou un polymère de synthèse.

22. Dispositif selon l'une quelconque des revendications 14 à 21, dans lequel l'adhésif (6) est imprimé sélectivement pour la délimitation d'un motif qui comprend un ou plusieurs motifs à lignes, motifs guillochés et motifs géométriques, de points, de graphiques et symboles et de caractères alphanumériques.

23. Dispositif selon l'une quelconque des revendications 14 à 22, dans lequel l'adhésif (6) est un adhésif thermofusible ou activé par la chaleur.

24. Dispositif selon l'une quelconque des revendications 14 à 23, dans lequel l'adhésif (6) est directement revêtu sur un revêtement réfléchissant (5) de la couche reportable (3).

25. Dispositif selon l'une quelconque des revendications 14 à 24, qui est sous forme d'un tronçon de matière enroulée sur un rouleau.

26. Procédé de report comprenant la disposition d'un dispositif de report selon l'une quelconque des revendications 14 à 25 ou fabriqué par un procédé selon l'une quelconque des revendications 1 à 13 sur un substrat (8) afin que la couche adhésive (6) soit au contact du substrat et que des zones non imprimées de l'adhésif adhèrent au substrat, et la séparation du support (1) du substrat de manière que seules les zones de la couche reportable (3) qui correspondent à des zones adhésives non imprimées soient reportées sur le substrat, les zones imprimées de l'adhésif délimitant une image, le dispositif étant disposé sur le substrat (8) de manière que l'image adhésive imprimée soit positionnée par rapport à une image portée par le substrat.

27. Procédé selon la revendication 26, dans lequel le substrat (8) est choisi parmi le papier et notamment le papier de chiffons, le papier ayant subi une finition de surface tel qu'un papier couché par une résine, un papier revêtu d'une laque, un papier non-tissé, un papier formé de fibres filées, un autre papier de synthèse, des films de matière plastique, des stratifiés de papier et de matière plastique, des matières plastiques métalliques, des feuilles métalliques, un papier revêtu d'une feuille métallique, des feuilles métalliques telles que des feuilles d'aluminium, du verre et des céramiques.

28. Procédé selon la revendication 26 ou 27, dans lequel le substrat (8) est un document de sécurité.

29. Procédé selon l'une quelconque des revendications 26 à 28, dans lequel les zones reportées subissent une surimpression totale ou partielle par une composition d'impression, telle qu'une encre d'impression ou une composition de laque formant un film.

## Revendications (Revendications pour l'(les) Etat(s) contractant(s) suivant(s): CH, LI, FR, IT, NL)

1. Procédé de fabrication d'un dispositif de report, le procédé comprenant la disposition d'une couche reportable (3) sur un support (1), la disposition d'une couche adhésive continue (6) liée à la couche reportable (3), et le traitement sélectif de la couche adhésive (6) pour la formation de zones qui ne peuvent pas être liées à un substrat dans les conditions normales de report, si bien que, lorsque le film adhésif traité est mis au contact d'un substrat (8) dans les conditions normales de report, seules les zones non traitées de l'adhésif adhèrent au substrat et que seules les zones de la couche reportable correspondant aux zones adhésives non traitées sont reportées sur le substrat lors de la séparation du support et du substrat.

2. Procédé selon la revendication 1, dans lequel la couche reportable (3) a une structure optiquement variable.

3. Procédé selon la revendication 2, dans lequel la structure optiquement variable est une structure qui diffracte la lumière.

4. Procédé selon la revendication 2 ou 3, dans lequel la couche reportable (3) est gaufrée et métallisée afin qu'elle délimite un hologramme.

5. Procédé selon la revendication 2 ou 3, dans lequel la couche reportable (3) est gaufrée et a une couche de réfraction, par exemple de sulfure de zinc, destinée à délimiter un hologramme.

6. Procédé selon la revendication 2 ou 3, dans lequel la couche reportable (3) a une structure multicouche provoquant des interférences de la lumière.

7. Procédé selon l'une quelconque des revendications précédentes, dans lequel le revêtement adhésif est traité sélectivement par impression par une composition de masquage (7).

8. Procédé selon la revendication 7, dans lequel l'étape d'impression est une impression lithographique, à l'aniline, par photogravure, typographique, par sérigraphie, électrostatique ou par report d'un film.

9. Procédé selon la revendication 7 ou 8, dans lequel la composition de masquage (7) contient un véhicule à séchage rapide pour l'encre, par exemple une résine ou un polymère synthétique.

10. Procédé selon l'une quelconque des revendications précédentes, dans lequel l'adhésif (6) est traité sélectivement pour la délimitation d'un motif (7) qui, lors du report, comporte un ou plusieurs motifs de lignes, motifs guillochés et motifs géométriques, des points, des graphiques et symboles, ainsi que des caractères alphanumériques.

11. Procédé selon l'une quelconque des revendications précédentes, dans lequel l'adhésif (6) est un adhésif thermofusible ou activé par la chaleur.

12. Procédé selon l'une quelconque des revendications précédentes, dans lequel l'adhésif (6) et revêtu directement sur un revêtement réfléchissant (5) de la couche reportable.

13. Procédé selon l'une quelconque des revendications précédentes, dans lequel la couche reportable (3) possède une image visible, les zones traitées sélectivement de la couche adhésive (6) constituant un masque qui forme une image qui est positionnée sur l'image à couche reportable.

14. Dispositif de report comprenant une couche reportable (3) sur un support (1), une couche adhésive continue (6) liée à la couche reportable, l'adhésif étant traité sélectivement afin qu'il forme des zones qui ne peuvent pas se lier à un substrat dans les conditions normales de report, si bien que seules des zones de la couche reportable qui correspondent aux zones adhésives non traitées sont reportées sur un substrat sur lequel le dispositif est placé lors d'une opération de report après séparation du support et du substrat.

15. Dispositif selon la revendication 14, dans lequel la couche reportable (3) contient une structure optiquement variable.

16. Dispositif selon la revendication 15, dans lequel la structure optiquement variable est un hologramme.

17. Dispositif selon la revendication 15 ou 16, dans lequel la couche reportable (3) est gaufrée et métallisée pour délimiter un hologramme.

18. Dispositif selon la revendication 15 ou 16, dans lequel la couche reportable (3) est gaufrée et possède une couche de réfraction, par exemple de sulfure de zinc, destinée à délimiter un hologramme.

19. Dispositif selon la revendication 15 ou 16, dans lequel la couche reportable (3) est une structure multicouche provoquant des interférences de la lumière.

20. Dispositif selon l'une quelconque des revendications 14 à 19, dans lequel le revêtement adhésif est traité sélectivement par impression par une composition de masquage (7).

21. Dispositif selon la revendication 20, dans lequel l'étape d'impression est réalisée par impression lithographique, à l'aniline, par photogravure, typographique, par sérigraphie, électrostatique ou par report d'un film.

22. Dispositif selon la revendication 20 ou 21, dans lequel la composition de masquage (7) contient un véhicule à séchage rapide pour l'encre, par exemple une résine ou un polymère de synthèse.

23. Dispositif selon l'une quelconque des revendications 14 à 22, dans lequel l'adhésif (6) est traité sélectivement pour la délimitation d'un motif qui comprend un ou plusieurs motifs à lignes, motifs guillochés et motifs géométriques, de points, de graphiques et symboles et de caractères alphanumériques.

24. Dispositif selon l'une quelconque des revendications 14 à 23, dans lequel l'adhésif (6) est un adhésif thermofusible ou activé par la chaleur.

25. Dispositif selon l'une quelconque des revendications 14 à 24, dans lequel l'adhésif (6) est directement revêtu sur un revêtement réfléchissant (5) de la couche reportable (3).

26. Dispositif selon l'une quelconque des revendications 14 à 25, dans lequel la couche reportable (3) délimite une image, les zones sélectivement traitées (7) de la couche adhésive (6) constituant un masque qui forme une image qui est repérée par rapport à l'image de la couche reportable.

27. Dispositif selon l'une quelconque des revendications 14 à 26, qui est sous forme d'un tronçon de matière enroulée sur un rouleau.

28. Procédé de report comprenant la disposition d'un dispositif de report selon l'une quelconque des revendications 14 à 27 ou fabriqué par un procédé selon l'une quelconque des revendications 1 à 13 sur un substrat (8) afin que la couche adhésive (6) soit au contact du substrat et des zones non traitées de l'adhésif adhèrent au substrat, et la séparation du support (1) du substrat de manière que seules les zones de la couche reportable (3) qui correspondent à des zones adhésives non traitées soient reportées sur le substrat.

29. Procédé selon la revendication 28, dans lequel les zones traitées de l'adhésif (6) délimitent une image, le dispositif étant placé sur le substrat (8) afin que l'image adhésive traitée soit repérée sur une image portée par le substrat.

30. Procédé selon la revendication 28 ou 29, dans lequel le substrat (8) est choisi parmi le papier et notamment le papier de chiffons, le papier ayant subi une finition de surface tel qu'un papier couché par une résine, un papier revêtu d'une laque, un papier non-tissé, un papier formé de fibres filées, un autre papier de synthèse, des films de matière plastique, des stratifiés de papier et de matière plastique, des matières plastiques métalliques, des feuilles métalliques, un papier revêtu d'une feuille métallique, des feuilles métalliques telles que des feuilles d'aluminium, du verre et des céramiques.

31. Procédé selon l'une quelconque des revendications 28 à 30, dans lequel le substrat (8) est un document de sécurité.

32. Procédé selon l'une quelconque des revendications 28 à 31, dans lequel les zones reportées subissent une surimpression totale ou partielle par une composition d'impression, telle qu'une encre d'impression ou une composition de laque formant un film.
